# EUROPÄISCHE PATENTSCHRIFT

(11) **EP 0 835 777 B1**
(45) Veröffentlichungstag und Bekanntmachung des Hinweises auf die Patenterteilung: **04.04.2001**
(21) Anmeldenummer: 97114722.8
(22) Anmeldetag: 26.08.1997
(51) Int. Cl.: B60J 7/06

(54) **Zusammenschiebbares Verdeck für Fahrzeugaufbauten**
Retractable cover for vehicle superstructures
Bâche repliable pour carrosserie de véhicules

(30) Priorität: 08.10.1996 DE 29617285 U
(43) Veröffentlichungstag der Anmeldung: 15.04.1998
(73) Patentinhaber: Edscha LKW-Schiebeverdecke GmbH, 42855 Remscheid (DE)
(72) Erfinder: Fliege, Dieter, 42855 Remscheid (DE)
(74) Vertreter: Sparing, Rolf Klaus

(56) Entgegenhaltungen:
- EP-A- 0 278 198
- DE-A- 4 421 280
- DE-U- 9 404 447
- FR-A- 2 236 390

## Beschreibung

Die Erfindung betrifft ein zusammenschiebbares Verdeck nach dem Oberbegriff des Anspruches 1.

Für zusammenschiebbare Verdecke von Fahrzeugaufbauten ist aus der DE-A-44 21 280 ein als Strangpressprofil, insbesondere aus einem Leichtmetallwerkstoff ausgebildeter Längsgurt bekannt geworden, welcher sich in besonderer Weise durch eine im wesentlichen in eine rechteckige Profilquerschnittsform integrierte Ausbildung einer Gruppe von drei U-förmigen Lauf-und Führungsschienen für die Abstützung und Führung von den Spriegeln zugeordneten Rollenwagen auszeichnet. Dabei sind die an die eine lediglich den Dachbereich des Verdeckes übergreifende Plane abstützenden Spriegel angeschlossenen Rollenwagen mit einer um eine vertikale Achse rotierende Führungsrolle und zwei um eine horizontale Achse rotierenden Laufrollen ausgestattet. Eine solche Profilausbildung der oberen Längsgurte eines Fahzeugaufbaues ist grundsätzlich mit dem Nachteil behaftet, daß für die Abstützung und Führung der Spriegel drei nebeneinanderliegende U-förmige Lauf-und Führungsschienen erforderlich sind, woraus neben einem entsprechenden Herstellungsaufwand auch ein beträchtliches Gewicht der oberen Längsgurte und zugleich eine entsprechende Breite der oberen Längsgurte resultiert.

DE-U-94 04 447 beschreibt ein zusammenschiebbares Verdeck für einen Pritschenaufbau eines LKWs, bei dem die oberen Längsgurte beiderseits eines emporstehenden Profilstegs gebildete Lauf- und Führungsschienen aufweisen, in derer einen eine an einem Spriegel angeordnete, gemäß einer vertikalen Achse verlagerbarer Rolle und in deren anderen eine an dem selben Spriegel angeordnete zweite, gemäß einer horizontalen Achse drehbar angeordnete Rolle die Führung des Spriegels relativ zu dem Längsgurt bewirken, wobei die Rollen an verhältnismäßig langen Hülsen angeordnet sind. Darüber hinaus kommt es zu einer sehr breiten Ausgestaltung des Endprofils des Spriegels, an dem die Rollen angeschlagen sind.

Es ist die Aufgabe der Erfindung, ein Verdeck nach dem Oberbegriff des Anspruchs 1 vorzuschlagen, das bei geringem Gewicht und einfacher Herstellbarkeit der oberen Längsgurte eine geringere Breite der Längsgurte ermöglicht, wobei ein Paar von Rollen die Führung des Spriegels relativ zu den Längsgurten besorgt.

Diese Aufgabe wird bei dem eingangs genannten Verdeck erfindungsgemäß mit den kennzeichnenden Merkmalen des Anspruchs 1 gelöst.

Die Erfindung ermöglicht ein zusammenschiebbares Verdeck für Fahrzeugaufbauten der eingangs genannten Bauart dahingehend zu verbessern, daß es bei insgesamt geringstmöglichem Gewicht und einer einfacheren Herstellbarkeit der oberen Längsgurte sowohl eine Verringerung der Breite der oberen Längsgurte als auch eine Verringerung des Aufwandes für die Ausstattung der Spriegel mit einer Vielzahl von Rollen ermöglicht und trotzdem den Anforderungen an Stabilität und Leichtgängigkeit gerecht wird.

Diese Anordnung einerseits der Laufbahnen der Führungsschienen und andererseits der komplementären Ausrichtung der Rollenachsen gewährleistet trotz des Einsatzes lediglich zweier einander gegenüberliegender Rollen oder Rollenpaare einerseits eine Leichtgängigkeit des Verdeckes und andererseits eine hinreichende Steifigkeit des Verdeckes im Fahrbetrieb. Insbesondere ermöglicht die erfindungsgemäße Anordnung einerseits den Verzicht auf eine dritte Rolle und damit eine schmälere Ausbildung der oberen Längsgurte und andererseits eine exakte horizontale und vertikale Abstützung und Führung der Spriegel.
Gemäß einer ersten bevorzugten Verwirklichungsform kann im Einzelnen vorgesehen sein, daß von den in den einander gegenüberliegenden Lauf- und/oder Führungsschienen ausgebildeten Laufbahnen eine erste Laufbahn unter einem Winkel von 90° und dieser gegenüberliegend eine zweite Laufbahn unter einem kleineren Winkel gegen die Horizontale angestellt ist.

Eine zweckmäßige Ausgestaltungform sieht dabei weiter vor, daß die Spriegel beidendig mit wenigstens zwei den aufragenden Profilsteg der oberen Längsgurte zwischen sich einschließenden Rollen ausgestattet sind, wobei eine der Rollen um eine vertikale Achse rotierend und die dieser gegenüberliegende Rolle um eine unter einem Winkel zur Vertikalen angestellte Achse rotierend aufgehängt ist, insbesondere in der Weise, daß die Achsen der beiden einander gegenüberliegend angeordneten und den aufragenden Profilsteg zwischen sich einschließenden Rollen miteinander einen Winkel von weniger als 90° einschließen.

Gemäß einer zweiten vorteilhaften Verwirklichungsform kann aber im Einzelnen auch vorgesehen sein, daß der einander gegenüberliegende Lauf- und/oder Führungsschienen bildende, aufragende Profilsteg der oberen Längsgurte unter einem Winkel zur Horizontalen angestellt ist.

In einer zweckmäßigen Weiterbildung dieser Verwirklichungsform kann dann weiter vorgesehen sein, daß die den Rollen zugeordneten Laufbahnen der einander gegenüberliegende Lauf- und/oder Führungsschienen von der einen zur anderen Seite des aufragenden Profilsteges der oberen Längsgurte zueinander von oben nach unten versetzt angeordnet sind.

Eine zweckmäßige Einzelausgestaltung kann ferner vorsehen, daß die den Rollen zugeordneten Laufbahnen der einander gegenüberliegende Lauf- und/oder Führungsschienen bei zueinander paralleler Ausrichtung unter einem Winkel von weniger als 90° gegen die Horizontale angestellt sind und daß in Verbindung mit einer solchen Anordnung der Laufbahnen die Achsen der beiden einander gegenüberliegend angeordneten und den aufragenden Profilsteg zwischen sich einschließenden Rollen horizontal ausgerichtet sind.

Beide der vorgenannten Verwirklichungsformen eines zusammenschiebbaren Verdeckes können sowohl bei lediglich über Rollenpaare an den oberen Längsgurten abgestützten und geführten Spriegeln als auch bei verdecken eingesetzt werden, bei denen die Spriegel beidendig über den aufragenden Profilsteg der oberen Längsgurte umgreifende Rollenwagen in den einander gegenüberliegenden Lauf-und/oder Führungsschienen geführt sind.

Die Erfindung ist in der nachfolgenden Beispielsbeschreibung anhand zweier in der Zeichnung dargestellter Ausführungsbeispiele im Einzelnen beschrieben.
- Fig. 1: zeigt eine schematische Teilschnittdarstellung einer ersten Gestaltungsform des oberen Längsgurtes eines Verdeckgestelles für ein zusammenschiebbares Verdeck.
- Fig. 2: zeigt eine schematische Teilschnittdarstellung einer zweiten Gestaltungsform des oberen Längsgurtes eines Verdeckgestelles für ein zusammenschiebbares Verdeck.

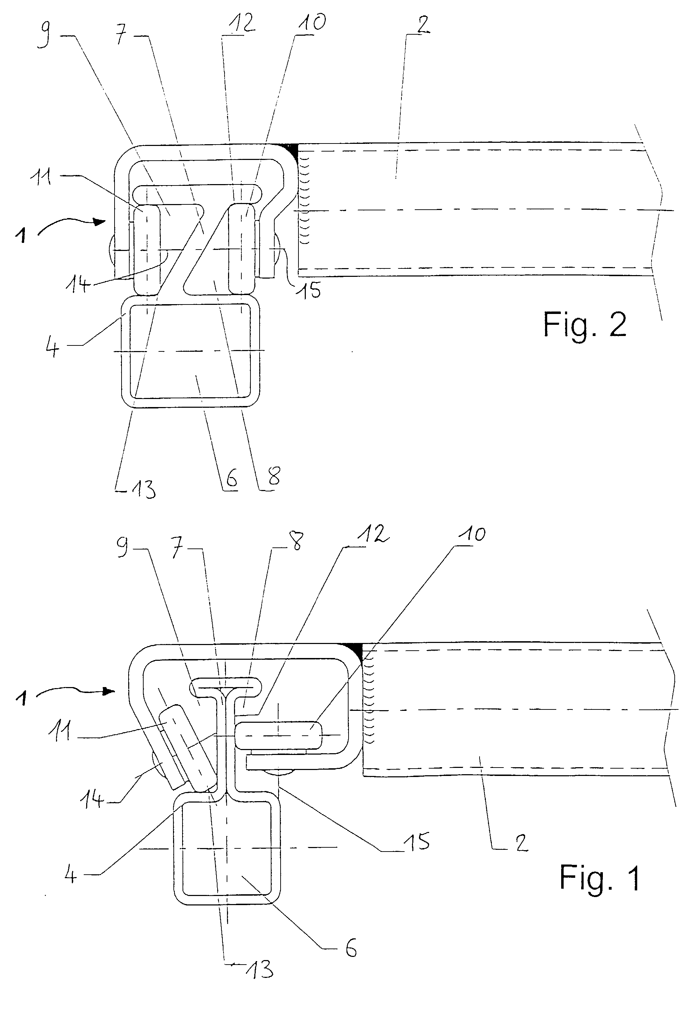

Ein mit einem in der Zeichnung nicht vollständig gezeigten zusammenschiebbaren Verdeck ausgestatteter Fahrzeugaufbau weist in den beiden oberen seitlichen Bereichen jeweils einen über gleichfalls im Einzelnen nicht dargestellte aufragende Stützen gegen eine Ladepritsche abgestützte Längsgurte zur Halterung und Führung verschieblicher und beidendig mit Rollenwagen 1 ausgestatteter Spriegel 2 auf. Die Längsgurte 4 sind bei dem in der Zeichnung gezeigten Ausführungsbeispiel über die Fahrzeuglänge hin in eine Anzahl untereinander verbindbarer Längenabschnitte unterteilt. Jeder der beiden Längsgurte 4 besteht aus einem einteiligen Profilmaterial, insbesondere einem einteiligen Strangpressprofil, welches einen durch ein geschlossenes Hohlprofil 6 gebildeten tragenden Bereich und aus einem dieses nach oben überragenden, aufragend angeordneten Profilsteg 7, welcher zwei einander gegenüberliegende Lauf-und Führungsschienen 8 und 9 für die Spriegel 2 abstützende und führende Rollen 10 und 11 bildet. Die beiden einander gegenüberliegenden Lauf-und Führungsschienen 8 und 9 sind jeweils mit einer Laufbahn 12 bzw. 13 für eine der beiden den Profilsteg 7 zwischen sich einschließend an den Enden der Spriegel 2 angeordnete Rollen 10 und 11 ausgestattet.
Dabei ist bei der Ausführungsform gemäß Fig. 1 von den in den einander gegenüberliegenden Lauf- und/oder Führungsschienen 8 und 9 ausgebildeten Laufbahnen 12 und 13 eine in der Führungsschiene 8 ausgebildete erste Laufbahn 12 unter einem Winkel von 90° zur Horizontalen ausgerichtet angeordnet, während die in der dieser gegenüberliegend angeordneten Führungsschiene 9 ausgebildete zweite Laufbahn 13 unter einem Winkel von 45° gegen die Horizontale angestellt ist. Von den beiden, den aufragenden Profilsteg der oberen Längsgurte 4 zwischen sich einschließenden Rollen 10 und 11 ist eine erste der Laufbahn 12 zugeordnete Rolle 10 um eine vertikale Achse 15 rotierend und die der ersten Rolle 10 gegenüberliegende Rolle 11 um eine unter einem Winkel von 45° zur Vertikalen angestellte Achse 14 rotierend aufgehängt.
Bei der Ausführungsform gemäß Fig. 2 ist der einander gegenüberliegende Lauf- und/oder Führungsschienen 12 und 13 bildende, aufragende Profilsteg 7 der oberen Längsgurte 4 unter einem Winkel zur Horizontalen geneigt angeordnet.

Die den beiden, den Profilsteg 7 zwischen sich einschließenden Rollen 10 und 11 zugeordneten Laufbahnen 12 und 13 der einander gegenüberliegenden Lauf- und/oder Führungsschienen 8 und 9 sind von der einen zur anderen Seite des aufragenden Profilsteges 7 der oberen Längsgurte 4 zueinander von oben nach unten versetzt angeordnet. Zugleich sind die den Rollen 10 und 11 zugeordneten Laufbahnen 12 und 13 der einander gegenüberliegende Lauf- und/oder Führungsschienen 8 und 9 bei zueinander paralleler Ausrichtung unter einem Winkel von weniger als 90° gegen die Horizontale angestellt und sind die Achsen 14 und 15 der beiden einander gegenüberliegend angeordneten und den aufragenden Profilsteg 7 zwischen sich einschließenden Rollen 10 und 11 horizontal ausgerichtet.

## Patentansprüche

1. Zusammenschiebbares Verdeck für Fahrzeugaufbauten, dessen Planenabdeckung von, auf einem, aus, über aufragende Stützen und Rungen gegen die Ladepritsche abgestützten,oberen Längsgurten (4) gebildeten, Verdeckgestell, längsverfahrbaren Spriegeln (2) getragen ist, wobei die Spriegel (2) beidendig mit Rollen oder Rollenwagen (10, 11) ausgestattet sind und über ein Paar von Rollen (10, 11) längsverfahrbar in einander benachbart an den oberen Längsgurten (4) des Verdeckgestells ausgebildeten Lauf- und/oder Führungsschienen (8, 9) geführt sind, wobei die oberen Längsgurte (4) aus einem einteiligen Profilmaterial bestehen, welches zur Bildung einander gegenüberliegender Lauf- und/oder Führungsschienen (8, 9) einen aufragenden Profilsteg (7) aufweist, wobei die Lauf- und/oder Führungsschienen (8, 9) an den Berührungsstellen mit den Rollen (10, 11) Laufbahnen (12, 13) definieren,
dadurch gekennzeichnet,
daß die Lauf- und/oder Führungsschienen (8, 9) beiderseits des aufragenden Profilstegs (7) einander gegenüberliegend vorgesehen sind, und
daß jede der beiden Rollen (10, 11) sich ganz oder teilweise gegen eine Laufbahn abstützt, die unter einem Winkel zur Horizontalen ausgerichtet ist.

2. Verdeck nach Anspruch 1, dadurch gekennzeichnet, daß in den einander gegenüberliegenden Lauf- und/oder Führungsschienen (8, 9) die eine Rolle (10) sich gegen eine erste Laufbahn (12) abstützt, die einen Winkel von 90° zur Horizontale aufweist, während die andere Rolle (11) sich gegen zwei Laufbahnen (13) abstützt, von denen eine horizontal und die andere unter einem Winkel zur Horizontalen angeordnet ist.

3. Verdeck nach Anspruch 1 oder 2, dadurch gekennzeichnet, daß die Spriegel (2) beidendig mit wenigstens zwei den aufragenden Profilsteg (7) der oberen Längsgurte (4) zwischen sich einschließenden Rollen (10, 11) ausgestattet sind, wobei eine der Rollen (10) um eine vertikale Achse (15) rotierend und die dieser gegenüberliegende Rolle (11) um eine unter einem Winkel zur Vertikalen angestellte Achse (14) rotierend aufgehängt ist.

4. Verdeck nach einem der Ansprüche 1 bis 3, dadurch gekennzeichnet, daß die Achsen (14, 15) der beiden einander gegenüberliegend angeordneten und den aufragenden Profilsteg (7) zwischen sich einschließenden Rollen (10, 11) miteinander einen Winkel von weniger als 90° zueinander aufweisen.

5. Verdeck nach Anspruch 1, dadurch gekennzeichnet, daß der einander gegenüberliegende Lauf- und/oder Führungsschienen (8, 9) bildende, aufragende Profilsteg (7) der oberen Längsgurte (4) unter einem Winkel zur Horizontalen angestellt ist.

6. Verdeck nach Anspruch 1 oder 5, dadurch gekennzeichnet, daß die den Rollen (10, 11) zugeordneten Laufbahnen (12, 13) der einander gegenüberliegenden Lauf- und/oder Führungsschienen (8, 9) von der einen zur anderen Seite des aufragenden Profilstegs (7) der oberen Längsgurte (4) zueinander von oben nach unten versetzt angeordnet sind.

7. Verdeck nach Anspruch 5 oder 6, dadurch gekennzeichnet, daß die den Rollen (10, 11) zugeordneten Laufbahnen (12, 13) der einander gegenüberliegenden Lauf- und/oder Führungsschienen (8, 9) bei zueinander paralleler Ausrichtung unter einem Winkel von weniger als 90° gegen die Horizontale angestellt sind.

8. Verdeck nach einem der Ansprüche 5 bis 7, dadurch gekennzeichnet, daß die Achsen (14, 15) der beiden einander gegenüberliegend angeordneten und den aufragenden Profilsteg (7) zwischen sich einschließenden Rollen (10, 11) horizontal ausgerichtet sind.

9. Verdeck nach einem der Ansprüche 1 bis 8, dadurch gekennzeichnet, daß die Spriegel (2) beidendig über den aufragenden Profilsteg (7) der oberen Längsgurte (4) umgreifende Rollenwagen in den einander gegenüberliegenden Lauf- und/oder Führungsschienen (8, 9) geführt sind.

## Claims

1. Retractable cover for vehicle superstructures, whose flat cover is supported by frame hoops (2) which can be moved longitudinally on a cover frame formed from upper longitudinal chords (4) supported by upwardly projecting supports and load-retaining pins against the loading platform, wherein the frame hoops (2) are fitted at each end with rollers or roller carriages (10, 11) and are guided through a pair of rollers (10, 11) longitudinally movable in track and/or guide rails (8,9) formed adjoining one another on the upper longitudinal chords (4) of the cover frame, wherein the upper longitudinal chords are made from a one-piece profiled material which to form the opposing track and/or guide rails (8, 9) has an upwardly protruding profiled web (7) wherein the track and/or guide rails (8, 9) define guide tracks (12, 13) at their points of contact with the rollers (10, 11)
characterised in that the track and/or guide rails (8, 9) are provided opposite one another on either side of the upwardly protruding profiled web (7) and that each of the two rollers (10, 11) is supported wholly or in part against a guide way which is aligned at an angle to the horizontal.

2. Cover according to Claim 1 characterised in that in the opposing track and/or guide rails (8, 9) the one roller (10) is supported against a first guide track (12) which has an angle of 90° to the horizontal whilst the other roller (11) is supported against two guide tracks (13) of which one is horizontal and the other is at an angle to the horizontal.

3. Cover according to Claim 1 or 2 characterised in that the frame hoops (2) are fitted at each end with at least two rollers (10, 11) which include between them the upwardly protruding profiled web (7) of the upper longitudinal chords (4), wherein one of the rollers (10) is suspended rotating about a vertical axis (15) and the roller (11) opposite this is suspended rotating about an axis (14) which is set up at an angle to the vertical.

4. Cover according to one of the Claims 1 to 3 characterised in that the axes (14, 15) of the two rollers (10, 11) which are arranged opposite one another and which include the upwardly protruding profiled web (7) between same have an angle with each other of less than 90°.

5. Cover according to Claim 1 characterised in that the upwardly protruding profiled web (7) of the upper longitudinal chords (4) forming opposing track and/or guide rails (8, 9) is set at an angle to the horizontal.

6. Cover according to Claim 1 or 5 characterised in that the guide tracks (12, 13) of the opposing track and/or guide rails (8,9) associated with the rollers (10, 11) are arranged off-set relative to each other from top to bottom from one side to the other of the upwardly projecting profiled web (7) of the upper longitudinal chords (4).

7. Cover according to Claim 5 or 6 characterised in that the guide tracks (12, 13) of the opposing track and/or guide rails (8, 9) associated with the rollers (10, 11) are when aligned parallel with each other set at an angle of less than 90 ° to the horizontal.

8. Cover according to one of Claims 5 to 7 characterised in that the axes (14, 15) of the two rollers (10, 11) which are arranged opposite one another and enclose the upwardly projecting profiled web (7) between them are aligned horizontal.

9. Cover according to one of claims 1 to 8 characterised in that the frame hoops (2) are guided at each end in opposing track and/or guide rails (8, 9) through roller carriages which engage round the upward projecting profiled web (7) of the upper longitudinal chords (4).

## Revendications

1. Bâche repliable pour carrosserie de véhicule, dont la couverture de bâche est portée par des arceaux (**2**) mobiles longitudinalement sur un châssis de bâche formé de membrures longitudinales supérieures (**4**) appuyées contre la plate-forme par l'intermédiaire d'appuis et de contre-fiches en saillie, les arceaux (**2**) étant munis à leurs deux extrémités de rouleaux ou de chariots roulants (**10, 11**) et étant guidés par l'intermédiaire dune paire de rouleaux (**10, 11**) de manière mobile longitudinalement dans des rails de déplacement et/ou de guidage (**8, 9**) formés voisins l'un de l'autre sur les membrures longitudinales supérieures (**4**) du châssis de bâche, les membrures longitudinales supérieures (**4**) étant composées d'un matériau en profilé d'un seul tenant qui, pour former des rails de déplacement et/ou de guidage (**8, 9**) mutuellement opposés, présentent une barre de profil en saillie (**7**), les rails de déplacement et/ou de guidage (**8, 9**) définissant des voies de déplacement (**12, 13**) au niveau des points de contact avec les rouleaux (**10, 11**), caractérisée en ce que les rails de déplacement et/ou de guidage (**8, 9**) sont prévus en chevauchement mutuel de chaque côté de la barre de profil (**7**) en saillie, et en ce que chacun des deux rouleaux (**10,11**) s'appuie entièrement ou partiellement contre une voie de déplacement qui est orientée selon un angle par rapport à l'horizontale.

2. Bâche selon la revendication **1**, caractérisée en ce que, dans les rails de déplacement et/ou de guidage (**8, 9**) mutuellement opposés, le premier rouleau (**10**) s'appuie contre une première voie de déplacement (**12**) qui présente un angle de 90° par rapport à l'horizontale, tandis que l'autre rouleau (**11**) s'appuie contre deux voies de défilement (**13**) dont l'une est horizontale et l'autre forme un angle avec l'horizontale.

3. Bâche selon la revendication **1** ou **2**, caractérisée en ce que les arceaux (**2**) sont équipés, aux deux extrémités, d'au moins deux rouleaux (**10, 11**) enserrant entre eux la barre de profil en saillie (**7**) de la membrure longitudinale supérieure (**4**), l'un des rouleaux étant suspendu rotatif autour d'un axe vertical (**15**) et le rouleau (**11**) opposé à celui-ci étant suspendu rotatif autour d'un axe (**14**) formant un angle par rapport à la verticale.

4. Bâche selon l'une des revendications **1** à **3**, caractérisée en ce que les axes (**14, 15**) des deux rouleaux (**10, 11**) mutuellement opposés et enserrant entre eux la barre de profil en saillie (**7**) présentent entre eux un angle de moins de 90°.

5. Bâche selon la revendication **1**, caractérisée en ce que la barre de profil en saillie (**7**) de la membrure longitudinale supérieure (**4**) formant des rails de déplacement et/ou de guidage (**8, 9**) opposés, est placée selon un angle par rapport à l'horizontale.

6. Bâche selon la revendication **1** ou **5**, caractérisée en ce que les voies de déplacement (**12, 13**) des rails de déplacement et/ou de guidage opposés (**8, 9**) associées aux rouleaux (**10, 11**) sont disposées décalées de haut en bas, l'une par rapport à l'autre, d'un côté à l'autre de la barre de profil en saillie (**7**) de la membrure longitudinale supérieure (**4**).

7. Bâche selon la revendication **5** ou **6**, caractérisée en ce que les voies de déplacement (**12, 13**) des rails de déplacement et/ou de guidage opposés (**8, 9**) associées aux rouleaux (**10, 11**), sont disposées selon une orientation parallèle, en formant un angle de moins de 90° par rapport à l'horizontale.

8. Bâche selon l'une des revendications **5** à **7**, caractérisée en ce que les axes (**5, 6**) des deux rouleaux (**14, 15**) mutuellement opposés et enserrant entre eux la barre de profil en saillie (**7**), sont disposés horizontalement.

9. Bâche selon l'une des revendications **1** à 8, caractérisée en ce que les arceaux (**2**) sont guidés de chaque côté dans les rails de déplacement et/ou de guidage opposés (**8, 9**) par l'intermédiaire de chariots roulants saisissant la barre de profil en saillie (**7**) de la membrure longitudinale supérieure (**4**).
